# EUROPÄISCHE PATENTSCHRIFT

(11) **EP 1 828 315 B1**
(45) Veröffentlichungstag und Bekanntmachung des Hinweises auf die Patenterteilung: **10.11.2010**
(21) Anmeldenummer: 05816257.9
(22) Anmeldetag: 13.12.2005
(51) Int. Cl.: C09B 67/22, D06P 1/24, D06P 3/60

(54) **MARINEBLAU- UND SCHWARZMISCHUNGEN, VERFAHREN ZU IHRER HERSTELLUNG UND IHRE VERWENDUNG ZUM F[RBEN VON HYDROXYGRUPPEN-HALTIGEN MATERIAL**
NAVY BLUE AND BLACK MIXTURES, METHOD FOR THE PRODUCTION THEREOF, AND THEIR USE FOR DYING MATERIAL CONTAINING HYDROXY GROUPS
MELANGES BLEU MARINE ET NOIR, PROCEDE PERMETTANT DE LES PRODUIRE ET LEUR UTILISATION POUR TEINTER DES MATERIAUX A BASE DE GROUPES HYDROXY

(30) Priorität: 17.12.2004 DE 102004060968
(43) Veröffentlichungstag der Anmeldung: 05.09.2007
(73) Patentinhaber: DyStar Colours Deutschland GmbH, 65926 Frankfurt am Main (DE)
(72) Erfinder: WIDLER, Günther, 67229 Grosskarlbach (DE); LUCIC, Erwin, 67061 Ludwigshafen (DE); KRAPP, Michael, 67122 Altrip (DE); BRUNNER, Heiko, 10243 Berlin (DE); EPPLE, Gerhard, 67273 Weisenheim/Berg (DE)
(86) Internationale Anmeldenummer: PCT/EP2005/056741
(87) Internationale Veröffentlichungsnummer: WO 2006/063998

(56) Entgegenhaltungen:
- EP-A- 0 649 833
- EP-A- 0 758 005
- EP-A- 1 111 124
- WO-A-2004/020731
- WO-A-2005/045124
- DE-A1- 4 241 868
- DATABASE WPI Section Ch, Week 198643 Derwent Publications Ltd., London, GB; Class E24, AN 1986-281207 XP002374171 & JP 61 204272 A (MITSUI TOATSU CHEM INC) 10. September 1986 (1986-09-10)

## Beschreibung

Die vorliegende Erfindung betrifft Mischungen von Küpenfarbstoffen für farbtonstabile Färbungen mit Küpenfarbstoffen in Marineblau- und Schwarztönen.

Handelsübliche Marineblau- und Schwarzmischungen von Küpenfarbstoffen besitzen gewisse anwendungstechnische Mängel, wie beispielsweise eine mehr oder weniger starke Farbtonverschiebung zur röteren Seite beim Seifen in Textilveredlungsbetrieben und auch beim Endverbraucher. Ferner zeigen die oben genannten Farbstoffe eine mangelhafte Wassertropfenechtheit. Dies gilt sowohl für die Reinfarbstoffe als auch für ihre Farbstoffmischungen.

Infolgedessen besteht ein Bedarf nach neuen Küpenfarbstoffmischungen zur Herstellung von Marineblau- bis Schwarztönen mit einer verbesserten Farbtonstabilität beim Seifen und einer verbesserten Wassertropfenechtheit. Küpenfarbstoffzusammensetzungen für blaue bzw. schwarze Färbungen werden in der DE-A1-4 241 868, WO-A1-2004/020731 sowie EP, A1, 1, 111, 124 bereits beschrieben.

Es wurde nun überraschend gefunden, dass Farbstoffmischungen enthaltend C.I. Vat Black 9 und mindestens einen der Farbstoffe C.I. Vat Blue 18, C.I. Vat Blue 19, C.I. Vat Blue 22, C.I. Vat Blue 6, halogenierte 16,17-Dialkyldibenzanthron-Derivate, C.I. Vat Violet 13, C.I. Vat Red 10, C.I. Vat Red 23, C.I. Vat Red 31, C.I. Vat Red 54, C.I. Vat Black 20 und optional C.I. Vat Black 65 die oben genannten Anforderungen in hohem Maße erfüllen.

Die Erfindung betrifft somit Mischungen von Küpenfarbstoffen für farbtonstabile Färbungen in Marineblau- bis Schwarztönen enthaltend C.I. Vat Black 9 und mindestens einen der Farbstoffe C.I. Vat Blue 18, C.I. Vat Blue 19, C.I. Vat Blue 22, C.I. Vat Blue 6 sowie halogenierte 16,17-Dialkyldibenzanthron-Derivate, C.I. Vat Violet 13 , C.I. Vat Red 10, C.I. Vat Red 23, C.I. Vat Red 31, C.I. Vat Red 54, C.I. Vat Black 20, sowie optional C.I. Vat Black 65.

Bevorzugte Farbstoffmischungen enthalten C.I. Vat Blue 22, C.I. Vat Violett 13 und C.I. Vat Black 9.

Die dabei eingesetzten Mengenverhältnisse der eingesetzten Blaufarbstoffe können hierbei zwischen 40 bis 99 Gew.-%, des eingesetzten Violettfarbstoffes zwischen 0,5 bis 40 Gew.-% und des eingesetzten Schwarzfarbstoffes zwischen 0,5 bis 40 Gew.-% liegen.

Besonders bevorzugte Farbstoffmischungen enthalten von 57 bis 75 Gew.-% C.I. Vat Blue 22, 15 bis 36 Gew.% C.I. Vat Violet 13 und 8 bis 20 Gew.-% C.I. Vat Black 9.

Ganz besonders bevorzugte Farbstoffmischungen enthalten 66,4 Gew.-% C.I. Vat Blue 22, 15,3 Gew.-% C.I. Vat Violet 13 und 18,3 Gew.-% C.I. Vat Black 9.

Die erfindungsgemäßen Farbstoffmischungen können als Präparation in fester oder in flüssiger Form vorliegen. In fester Form enthalten sie, so weit erforderlich, die in Handelsfarbstoffen üblichen Hilfsmittel (z.B. Dispergiermittel, Entstaubungsmittel) und Nuancierfarbstoffe ; falls sie in flüssiger Form (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoffmischungen im Allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 20 bis 90 Gew.-%, bezogen auf die sie enthaltene Präparation, enthalten.

Sofern die erfindungsgemäßen Farbstoffmischungen in wässriger Lösung vorliegen, so beträgt der Gesamtfarbstoffgehalt in diesen wässrigen Lösungen bis zu etwa 50 Gew.-%, wie beispielsweise zwischen 5 und 50 Gew.-%.

Die erfindungsgemäßen Farbstoffmischungen lassen sich in an und für sich üblicher Verfahrensweise herstellen, beispielsweise durch mechanisches Vermischen der Einzelfarbstoffe, sei es in Form von deren Farbstoffpulvern oder -granulaten oder deren formulierten Flüssigeinstellungen der Einzelfarbstoffe, vorzugsweise unter Zusatz von Dispergiermitteln.

Dieser Mischprozess erfolgt zweckmäßigerweise in geeigneten Mühlen, beispielsweise Kugel- oder Sandmühlen. Getrennt formulierte Einzelfarbstoffe können aber auch durch Einrühren in Färbeflotten gemischt werden.

Zur Herstellung bzw. Verbesserung des Dispersitätsgrades kann ein oberflächenaktives Mittel oder ein Gemisch derartiger Hilfsmittel zugesetzt werden. Selbstverständlich kann die Teilchengröße der Farbstoffpartikel durch eine Mahlbehandlung z.B. Nass-Perlmahlung, sei es während der Synthese oder im Anschluss daran entsprechend beeinflusst und auf einen geforderten Wert eingestellt werden.

Als Dispergiermittel kommen solche anionischer oder nichtionischer Natur in Betracht.
Neben Dispergiermitteln der einen oder anderen Gruppe können auch Dispergiermittelgemische eingesetzt werden, wobei in erster Linie Gemische von nichtionischen und anionischen Dispergiermitteln gemeint sind, da anionische und kationische Dispergiermittel im Gemisch untereinander zur Bildung von Ausfällungen neigen.

Bei den anionschen Dispergiermitteln haben sich insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und Benzolsulfonsäure, Kondensationsprodukte aus gegebenfalls substituiertem Phenol mit Formaldehyd und Natriumbisulfit als wirksam erwiesen.

Weiterhin kommen vor allem Ligninsulfonate in Betracht, z.B. solche, die nach dem Sulfit- oder Kraft-Verfahren gewonnen werden. Vorzugsweise handelt es sich um Produkte, die z.T. hydrolysiert, oxidiert, propoxyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam.

Besonders geeignet sind Ligninsulfonate mit einem durchschnittlichen Molekulargewicht zwischen 1.000 und 100.000, einem Gehalt an aktivem Ligninsulfonat von mindestens 80% und vorzugsweise mit niedrigem Gehalt an mehrwertigen Kationen.
Der Sulfonierungsgrad kann in weiten Grenzen variieren.

Nichtionische Dispergiermittel oder Emulgatoren sind z.B. Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen und Carbonsäure-amiden.
Hierbei handelt es sich z.B.um Ethylenoxid-Addukte aus der Klasse der Umsetzungsprodukte von Ethylenoxid mit
- a) gesättigten und/oder ungesättigten Fettalkoholen mit 6 bis 20 C-Atomen; oder
- b) Alkylphenolen mit 4 bis 12 C-Atomen im Alkylrest, oder
- c) gesättigten und/oder ungesättigten Fettaminen mit 14 bis 20 C-Atomen;
- d) gesättigten und/oder ungesättigten Fettsäuren mit 14 bis 20 C-Atomen.
   Als Ethylenoxid-Addukte kommen in Betracht
- a) Umsetzungsprodukte von gesättigten und/oder ungesättigten Fettalkoholen mit 6 bis 20 C-Atomen, mit 5 bis 30 Mol Ethylenoxid,
- b) Umsetzungsprodukte von Alkylphenolen mit 4 bis 12 C-Atomen mit 5 bis 20 Mol Ethylenoxid;
- c) Umsetzungsprodukte von gesättigten und/oder ungesättigten Fettaminen mit 14 bis 20 C-Atomen mit 5 bis 20 Mol Ethylenoxid;
- d) Umsetzungsprodukte von gesättigten und/oder ungesättigten Fettsäuren mit 14 bis 20 C-Atomen mit 5 bis 20 Mol Ethylenoxid.

Die erfindungsgemäßen Farbstoffmischungen sind als solche oder auch im Gemisch mit anderen Küpenfarbstoffen vorzüglich zum Färben und Bedrucken von cellulosischem Fasermaterialien geeignet.

In den bei obigen Applikationen eingesetzten Färbeflotten sollen die erfindungsgemäßen Farbstoffmischungen in möglichst feiner Verteilung vorliegen.

Die Feinverteilung der Farbstoffe erfolgt in an sich bekannter Weise dadurch, dass man die Farbstoffmischungen zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, dass eine optimale spezifische Oberfläche erreicht wird und die Sedimentation des Farbstoffs möglichst gering ist. Die Teilchengrößen der Farbstoffe liegen im Allgemeinen zwischen 0,5 und 5µm, vorzugsweise bei etwa 1µm.

Die so erhaltenen Farbstoffdispersionen können auch noch weitere Hilfsmittel enthalten, z.B. Fungizide und Antrocknungsverhinderer.

Für die meisten Anwendungsbereiche werden Pulver- bzw. Granulateinstellungen bevorzugt. Diese enthalten den Farbstoff, Dispergiermittel und andere Hilfsmittel, wie z.B. Entschäumer und Entstaubungsmittel.

Ein bevorzugtes Herstellungsverfahren für pulverförmige Farbstoffzubereitungen besteht darin, dass den oben beschriebenen flüssigen Farbstoffdispersionen die Flüssigkeit entzogen wird, z.B. durch Vakuumtrocknung, Gefriertrocknung durch Trocknung auf Walzentrocknern, vorzugsweise aber durch Sprühtrocknung.

Die erfindungsgemäßen Farbstoffgemische können einzeln formuliert und nach Einzelformulierung in flüssig-disperser Form gemischt und als Flüssigfarbstoff-Formulierung fertig gestellt werden oder nach Mischung der flüssig-dipersen Form getrocknet oder nach Trocknung de Einzelkomponenten gemischt werden. Unter Trocknung sind hier die gängigen Verfahren nach Stand der Technik wie Vakuumtrocknung, Walzentrocknung, Sprühtrocknung, Granulierung oder Gefriertrocknung zu verstehen.

Zur Herstellung bzw. Verbesserung des Dispersionsgrades kann ein oberflächenaktives Mittel oder ein Gemisch derartiger Hilfsmittel zugesetzt werden. Selbstverständlich kann die Teilchengröße der Farbstoffpartikel durch eine Mahlbehandlung z.B. Nassperlmahlung, sei es während der Synthese oder im Anschluss daran entsprechend beeinflusst und auf einen geforderten Wert eingestellt werden.

Zur Herstellung der erfindungsgemäßen Farbstoffmischungen in fein verteilter Form kann folgendermaßen vorgegangen werden:
Beispielsweise werden 10 bis 50 Gewichtsteile erfindungsgemäße Farbstoffmischung mit 0 bis 90 Gewichtsteilen Ligninsulfonat,
   90 bis 0 Gewichtsteilen Kondensationsprodukt aus Naphthalinsulfonsäuren und Formaldehyd,
   0 bis 10 Gewichtsteilen nicht-ionisches Tensid,
   0 bis 2 Gewichtsteile Netzmittel,
   0 bis 2 Gewichtsteile Entschäumer,
   0 bis 3 Gewichtsteilen Entstaubungsmittel
   in einer Perlmühle gemahlen

Die erfindungsgemäßen Farbstoffmischungen können sowohl durch klassische chemische Reduktionsmittel (anorganische (z.B. sulfidische), organische Reduktionsmittel, wie z.B. Hydroxyaceton) als auch elektrochemisch färbetechnisch appliziert werden und sind in allen für Küpenfarbstoff gängigen Färbeverfahren, wie beispielsweise im Ausziehverfahren oder dem Pad Steam Verfahren, einsetzbar.

Tabelle 1 zeigt die coloristischen Eigenschaften im Seifverhalten der erfindungsgemäßen Farbstoffe im Vergleich zu herkömmlichen Marineblaumarken.

Die Bewertung der Färbung erfolgt farbmetrisch durch Farbortmessung gemäß DIN 6174 und DIN 5033. Dabei zeigen die Beispiele 1 und 2 die coloristischen Daten hinsichtlich des Seifverhaltens von existierenden Handelsfarbstoffen, während die Beispiele 3 bis 6 das coloristische Profil der erfindungsgemäßen Marineblaumischungen zeigen.

**Tabelle 1: Coloristik im Seifverhalten der erfindungsgemäßen Mischungen**

| Beispiel Nr. | Farbstoff-Zusammensetzung | Farbdifferenzen | | | | | |
|---|---|---|---|---|---|---|---|
| | | dH Minuten | | | dC Minuten | | |
| | | 0 vs1 | 0 vs 20 | 1 vs 20 | 0vs 1 | 0 vs 20 | 1 vs 20 |
| 1 Stand der Technik | 8 % C.I. Vat Blue 22 | 0,3 | 0,5 | 0,2 | -1,5 | 0,3 | 1,8 |
| 2. Stand der Technik | 4 % Mix bestehend aus 37,6% C.I. Vat Blue 20 , 43,1% C.I. Vat Blue 4 und 19,3% C.I. Vat Green 3 | 1,4 | 3,8 | 2,4 | 1,2 | 1,2 | 0 |
| 3: Muster 1 | 8% Muster 1:40% C.I. Vat Blue 22; 40% C.I. Vat Violet 13; 18,6% C.I. Vat Black 9; | 0,5 | 0,6 | 0,1 | 0,4 | 0,5 | 0,1 |
| 4: Muster 2 | 5,6% Muster 2: 57,1% C.I. Vat Blue 22; 28,6% C.I. Vat Violet 13; 13,34% C.I. Vat Black 9; | 0,4 | 0,6 | 0,2 | 0,4 | -0,1 | -0,5 |
| 5: Muster 3 | 4% Muster 3: 66,3% C.I. Vat Blue 22; 15,3% C.I. Vat Violet 13; 17,20% C.I. Vat Black 9; 1,2% | 0,1 | 0 | -0,1 | 0,2 | 0,3 | 0,1 |
| | 4,425% Muster 4: 74,6% C.I. Vat Blue 22; 16,9% Vat Violet 13; 2,65% C.I. Vat Black 9; 5,65% | | | | | | |
| 6: Muster 4 | C.I. Vat Black 65; | 0,3 | 0,6 | 0,3 | 0,4 | 0 | 0,4 |
| 7: Muster 5 | 3,62% Muster 5: 71,82% C.I. Vat Blue 22, 19,88% C.I. Vat Black 9; 8,3% C.I. Vat Red 10 | 0,6 | 0,9 | 0,3 | 0,9 | 1,2 | 0,3 |
| 8: Muster 6 | 3,62% Muster 6. 71,82% C.I. Vat Blue 22; 19,88% C.I. Vat Black 9; 8,3% C.I. Vat Red 23 | -0,2 | -0,6 | -0,4 | 0 | -0,8 | -0,8 |

| | | | | | | | |
|---|---|---|---|---|---|---|---|
| Wie die dH und dC-Werte in Tabelle 1 zeigen, weisen die neuen erfindungsgemäßen Farbstoffmischungen (Beispiele 3 bis 6) eine hohe Stabilität vor allem bezüglich der Farbnuance und Reinheit auf. | | | | | | | |

Die nachstehenden Beispiele dienen zur Erläuterung der Erfindung.

### Herstellung der Farbstoffmischung

### Muster 1

In einem geeigneten Mischer werden 102,4g formiertes C.I. Vat Blue 22. fl. (Farbstoffgehalt: 40%), 102,4 g formiertes C.I. Vat Violet 13 fl. (Farbstoffanteil: 40%) und 51,2g formiertes C.I. Vat Black 9 fl. (Farbstoffanteil: 40%) über 3 Stunden gemischt.
Es werden 256 g Farbstoffmischung bestehend aus
40 Gew.-% C.I. Vat Blue 22
40 Gew.-% C.I. Vat Violet 13
1866 Gew.-% C.I. Vat Black 9

### erhalten.

### Muster 2

In einem geeigneten Mischer werden 150,7g formiertes C.I. Vat Blue 22 fl. (Farbstoffgehalt: 40%), 75,4 g formiertes C.I. Vat Violet 13 fl. (Farbstoffanteil: 40%) und 37,7g formiertes C.I. Vat Black 9 fl. (Farbstoffanteil: 40%) über 3 Stunden analog zu Beispiel 5 gemischt.
Es wurden 264 g Farbstoffmischung bestehend aus
57 Gew.-% C.I. Vat Blue 22
28,6 Gew.-% C.I. Vat Violet 13
13,34,9 Gew.-% C.I. Vat Black 9

### erhalten.

### Muster 3

In einem geeigneten Mischer werden 252g eines formierten C.I. Vat Blue 22 fl. (Farbstoffgehalt: 40%), 58 g eines formierten C.I. Vat Violet 13 fl. (Farbstoffanteil: 40%) und 70 g formiertes C.I. Vat Black 9 (Farbstoffgehalt 40%) 1 Stunde lang gemischt.
Es werden 380g Farbstoffmischung bestehend aus
66,3 Gew.-% C.I. Vat Blue 22
15,3 Gew.-% C.I. Vat Violet 13
17,2 Gew.-% C.I. Vat Black 9

### erhalten.

### Muster 4

In einem geeigneten Mischer werden 283,5 g formiertes C.I. Vat Blue 22 fl. (Farbstoffgehalt: 40%), 64,2g formiertes C.I. Vat Violet 13 fl. (Farbstoffgehalt: 40%), 10,7g formiertes C.I. Vat Black 9 (Farbstoffgehalt: 40%) und 21,6 g formiertes C.I. Vat Black 65 (Farbstoffgehalt: 40%) eine Stunde lang gemischt.
Es werden 380 g Farbstoffmischung bestehend aus
74,6 Gew.-% C.I. Vat Blue 22
16,9 Gew.-% C.I. Vat Violet 13
2,65 Gew.-% C.I. Vat Black 9
5,65 Gew.-% C.I. Vat Black 65

### erhalten.

### Muster 5

In einem geeigneten Mischer werden 272,92 g formiertes C.I. Vat Blue 22 fl. (Farbstoffgehalt: 40%), 31,54g formiertes C.I. Vat Red 10 fl. (Farbstoffgehalt: 40%), 75,54g formiertes C.I. Vat Black 9 (Farbstoffgehalt: 40%) eine Stunde lang gemischt.
Es werden 380 g Farbstoffmischung bestehend aus
71,82 Gew.-% C.I. Vat Blue 22
8,3 Gew.-% C.I. Vat Red 10
19,88 Gew.-% C.I. Vat Black 9

### erhalten.

### Muster 6

In einem geeigneten Mischer werden 272,92 g formiertes C.I. Vat Blue 22 fl. (Farbstoffgehalt: 40%), 31,54g formiertes C.I. Vat Red 23 fl. (Farbstoffgehalt: 40%), 75,54g formiertes C.I. Vat Black 9 (Farbstoffgehalt: 40%) eine Stunde lang gemischt.
Es werden 380 g Farbstoffmischung bestehend aus
71,82 Gew.-% C.I. Vat Blue 22
8,3 Gew.-% C. I. Vat Red 23
19,88 Gew.-% C.I. Vat Black 9

### erhalten.

### Färbebeispiel

Mit einer Färbeflotte, die aus 10% (bezogen auf das eingesetzte Warengewicht der zu färbenden Baumwoll-Wirkware) des Mischfarbstoffes aus Muster 1 bis 6, 35 ml/l Natronlauge 38 °Bé und 12 g/l Natriumdithionit 85% als Reduktionsmittel besteht, wird zusammen mit der zu färbenden Ware, in diesem Fall Baumwoll-Wirkware bei Raumtemperatur im Flottenverhältnis von 1 Teil Ware zu 20 Teilen Wasser vorbereitet. Das Färbebehältnis wird verschlossen und mit 2°C/min auf 60°C aufgeheizt. Diese Temperatur wird dann 45 min beibehalten. Während dieser Zeit zieht der durch das Reduktionsmittel gelöste Farbstoff auf die Faser.

Anschließend wird mit kaltem Wasser gespült und im nächsten Schritt die Oxidation durchgeführt. Hierfür wird eine Behandlungsflotte im Flottenverhältnis von 1:50 bei 60°C vorbereitet, in dem 2 ml/l Wasserstoffperoxid 50% enthalten sind. Die Oxidation findet während 10 min bei diesen Bedingungen statt. Durch den im folgenden stattfindenden Seifschritt wird der endgültige Farbton der Färbung hergestellt. Hierfür wird eine Behandlungsflotte im Flottenverhältnis von 1:50 bei 98°C vorbereitet, in dem 1 g/l eines handelsüblichen Seifmittels und 0,5 g/l Natriumkarbonat enthalten ist. Diese Behandlung wird über 20 min durchgeführt. Anschließend wird gespült, entwässert und getrocknet.

## Patentansprüche

1. Mischungen von Küpenfarbstoffen für farbtonstabile Färbungen in Marineblau- bis Schwarztönen enthaltend C.I. Vat Black 9 und mindestens einen der Farbstoffe C.I. Vat Blue 18, C.I. Vat Blue 19, C.I. Vat Blue 22, C.I. Vat Blue 6 sowie halogenierte 16,17-Dialkyl-dibenzanthron-Derivate, C.I. Vat Violet 13, C.I. Vat Red 10, C.I. Vat Red 23, C.I. Vat Red 31, C.I. Vat Red 54, C.I. Vat Black 20 und optional ein C.I. Vat Black 65.

2. Marineblaumischungen gemäß Anspruch 1 enthaltend 0,5 bis 40 Gew.-% CI Vat Black 9, 40 bis 99 Gew.-%, C.I. Vat Blue 22, 0,5 bis 40 Gew.-% C.I. Vat Violett 13.

3. Marineblaumischungen gemäß Anspruch 1 enthaltend 66,4 Gew.-% C.I. Vat Blue 22, 15,3 Gew.-% C.I. Vat Violet 13 und 18,3 Gew.-% C.I. Vat Black 9.

4. Verfahren zur Herstellung einer Farbstoffmischung gemäß Anspruch 1 durch mechanisches Mischen der Komponenten.

5. Farbstoff- und Pigmentpräparationen enthaltend eine Farbstoffmischung gemäß Anspruch 1.

6. Verwendung von Farbstoffmischungen gemäß Anspruch 1 zum farbtonstabilen Färben und Drucken von cellulosehaltigem Material.

## Claims

1. Mixtures of vat dyes for hue-stable dyeings in navy to black shades comprising C.I. Vat Black 9 and at least one of C.I. Vat Blue 18, C.I. Vat Blue 19, C.I. Vat Blue 22, C.I. Vat Blue 6 and also halogenated 16,17-dialkyldibenzanthrone derivatives, C.I. Vat Violet 13, C.I. Vat Red 10, C.I. Vat Red 23, C.I. Vat Red 31, C.I. Vat Red 54, C.I. Vat Black 20, and optionally C.I. Vat Black 65.

2. The navy mixtures according to claim 1 which comprise 0.5% to 40% by weight of CI Vat Black 9, 40% to 99% by weight of C.I. Vat Blue 22, 0.5% to 40% by weight of C.I. Vat Violet 13.

3. The navy mixtures according to claim 1 which comprise 66.4% by weight of C.I. Vat Blue 22, 15.3% by weight of C.I. Vat Violet 13 and 18.3% by weight of C.I. Vat Black 9.

4. The process for producing a dye mixture according to claim 1 by mechanical mixing of the components.

5. Dye and pigment preparations comprising a dye mixture according to claim 1.

6. Use of dye mixtures according to claim 1 for hue-stable dyeing and printing of cellulosic material.

## Revendications

1. Mélanges de colorants de cuve pour teintures à nuances stables en nuances bleu marine à noir, contenant le colorant C.I. Vat Black 9 et au moins l'un des colorants C.I. Vat Blue 18, C.I. Vat Blue 19, C.I. Vat Blue 22, C.I. Vat Blue 6 ainsi que des dérivés halogénés de 16,17-dialkyl-dibenzanthrone, les colorants C.I. Vat Violet 13, C.I. Vat Red 10, C.I. Vat Red 23, C.I. Vat Red 31, C.I. Vat Red 54, C.I. Vat Black 20 et en option un colorant C.I. Vat Black 65.

2. Mélanges bleu marine selon la revendication 1, contenant 0,5 à 40 % en poids de C.I. Vat Black 9, 40 à 99 % en poids de C.I. Vat Blue 22, 0,5 à 40 % en poids de C.I. Vat Violet 13.

3. Mélanges bleu marine selon la revendication 1, contenant 66,4 % en poids de C.I. Vat Blue 22, 15,3 % en poids de C.I. Vat Violet 13 et 18,3 % en poids de C.I. Vat Black 9.

4. Procédé pour la préparation d'un mélange de colorants selon la revendication 1, par mélange mécanique des composants.

5. Préparations de colorants et de pigments contenant un mélange de colorants selon la revendication 1.

6. Utilisation de mélanges de colorants selon la revendication 1 pour la teinture et l'impression à nuances stables de matière contenant de la cellulose.
